# FASCICULE DE BREVET EUROPEEN

(11) **EP 1 021 942 B1**
(45) Date de publication et mention de la délivrance du brevet: **28.09.2005**
(21) Numéro de dépôt: 00440007.3
(22) Date de dépôt: 13.01.2000
(51) Int. Cl.: A01B 73/06

(54) **Pulvériseur agricole**
Landwirtschaftliche Egge
Agricultural Harrow

(30) Priorité: 22.01.1999 FR 9900796
(43) Date de publication de la demande: 26.07.2000
(73) Titulaire: Kuhn-Huard S.A., 44142 Chateaubriant Cedex (FR)
(72) Inventeur: Gentilhomme, Guy, 44110 louisfert (FR); Sechet, Arnaud, 49450 Villedieu-la-Blouere (FR)
(74) Mandataire: Andres, Jean-Claude

(56) Documents cités:
- EP-A- 0 192 917
- WO-A-93/14619
- FR-A- 2 342 013
- FR-A- 2 758 228
- US-A- 1 421 048

## Description

La présente invention se rapporte au domaine technique général du machinisme agricole et en particulier au domaine du travail du sol. Il existe différentes machines de travail du sol, notamment pour le déchaumage et/ou la préparation de lits de semence. L'invention concerne un pulvériseur agricole comportant plusieurs trains d'outils du type batterie de disques, montés sur un châssis (voir p.ex. EP-A-192917). De tels pulvériseurs sont de différents types et permettent d'orienter les trains d'outils de façon particulière dans au moins une position de travail. On connaît ainsi des pulvériseurs dont les trains d'outils forment sensiblement un "V" ou un "X". Il est important de pouvoir travailler des bandes de terre relativement larges et de pouvoir se déplacer sur les routes avec un encombrement réduit et en particulier une largeur de transport respectant la réglementation en vigueur. Ces machines présentent donc avantageusement des trains d'outils déplaçables par rapport au châssis entre une position de transport et au moins une position de travail. Un tel déplacement nécessite donc des moyens d'entraînement appropriés.

Il est connu de réaliser un pulvériseur agricole comportant :
- un châssis,
- deux trains d'outils avant et deux trains d'outils arrière suspendus chacun sur le châssis à l'aide d'une articulation respective d'axe sensiblement vertical, chaque train d'outils pouvant prendre différentes orientations par rapport au châssis, correspondant à une position de transport et à au moins une position de travail,
- des moyens d'entraînement comprenant d'une part un dispositif à leviers en liaison d'entraînement avec lesdits trains d'outils et monté pivotant sur le châssis à l'aide d'une articulation, et d'autre part au moins un vérin hydraulique agissant sur ledit dispositif à leviers pour pivoter lesdits trains d'outils.

En effet, le document **FR 2 758 228 - A1**, décrit un pulvériseur agricole comprenant un châssis sur lequel sont suspendus des trains d'outils. Ces derniers peuvent se déplacer entre une position de transport et au moins une position de travail, correspondant à un positionnement replié et un positionnement déployé. Le déplacement des trains d'outils est assuré par deux palonniers, chacun desdits palonniers étant en liaison d'entraînement avec un train d'outils avant et un train d'outils arrière du pulvériseur. Les palonniers sont localisés de chaque côté du châssis d'une part et sont reliés entre eux par un axe horizontal d'autre part. Les palonniers sont donc montés pivotants selon cet axe horizontal. La liaison d'entraînement est obtenue à l'aide de bras. En outre, un dispositif d'actionnement comprenant un vérin hydraulique est en liaison avec l'axe horizontal reliant les palonniers, de manière à les faire pivoter. Un tel mode d'entraînement présente un encombrement notable, ainsi que plusieurs points de montage sur le châssis. En outre, il semble qu'une orientation différentiée entre les trains d'outils avant et arrière n'est pas réalisable de façon simple.

On connaît également un pulvériseur agricole dénommé **"DISC PROFI - X"** et décrit notamment dans un prospectus de la Société **"INTERTEC".** Ce pulvériseur connu comporte un châssis constitué d'une poutre centrale et d'ailerons latéraux solidaires de ladite poutre centrale. Des trains d'outils sont montés pivotants sous les ailerons de manière à pouvoir se déployer en travail et se replier en transport dans un plan sensiblement horizontal. Le mécanisme de déplacement des trains d'outils comprend un organe coulissant le long de la partie avant de la poutre centrale sous l'effet d'un vérin hydraulique. Ledit organe coulissant est relié aux trains d'outils avant par l'intermédiaire de premiers bras lesquels sont articulés sur lesdits trains d'outils avant de manière à leur impartir un mouvement de pivotement. Les trains d'outils arrière, quant à eux, sont reliés par l'intermédiaire de bras secondaires aux trains d'outils avant et ce pour être pivotés sous l'effet du déplacement desdits trains d'outils avant.

Le coulissement de l'organe coulissant nécessite une structure de guidage, en l'occurrence la poutre centrale, laquelle est soumise à un encrassement élevé. Ceci peut nuire à terme à un fonctionnement optimal avec un minimum de jeu entre les pièces en mouvement.

L'objet de la présente invention vise donc à remédier aux inconvénients de l'état de la technique et notamment à réduire l'encombrement des moyens d'entraînement utilisés pour pivoter les trains d'outils sur le châssis.

L'objet assigné à la présente invention est atteint à l'aide d'un pulvériseur agricole tel que revendiqué dont le dispositif à leviers comporte un levier double monté pivotant sur le châssis à l'aide d'une articulation d'axe sensiblement orthogonal au plan de pivotement des trains d'outils, ledit levier double comportant une première branche en liaison d'entraînement avec les trains d'outils avant et une deuxième branche en liaison d'entraînement avec les trains d'outils arrière.

Un objet supplémentaire de la présente invention vise à obtenir un réglage facile et peu coûteux en temps de l'orientation respective des trains d'outils avant et/ou arrière.

Selon un exemple de réalisation intéressant, l'une au moins des branches du levier double coopère, à cet effet, avec une bielle de réglage permettant de régler l'orientation angulaire des trains d'outils correspondants, cette bielle de réglage étant d'une part articulée sur le levier double et d'autre part en liaison d'entraînement avec lesdits trains d'outils, un vérin étant articulé entre ledit levier double et ladite bielle de réglage.

Selon un autre exemple de réalisation intéressant, les deux branches du levier double constituent deux bielles pivotantes articulées sur le même axe de pivotement et actionnées indépendamment ou simultanément par un vérin hydraulique respectif.

D'autres caractéristiques et avantages de l'invention ressortiront de la description détaillée figurant ci-après et faite en référence aux dessins annexés donnés à titre d'exemples non limitatifs et dans lesquels :
- la **figure 1** représente, en vue de dessus, un pulvériseur agricole conforme à l'invention, en position de travail,
- la **figure 2** représente, en vue de dessus, le pulvériseur agricole de la figure 1 en position de transport,
- la **figure 3** représente, en vue latérale, le pulvériseur agricole de la figure 1 en position de transport,
- la **figure 4** représente une vue partielle des moyens d'entraînement d'un deuxième exemple de réalisation d'un pulvériseur agricole conforme à l'invention,
- la **figure 5** représente une vue partielle des moyens d'entraînement d'un troisième exemple de réalisation d'un pulvériseur agricole conforme à l'invention.

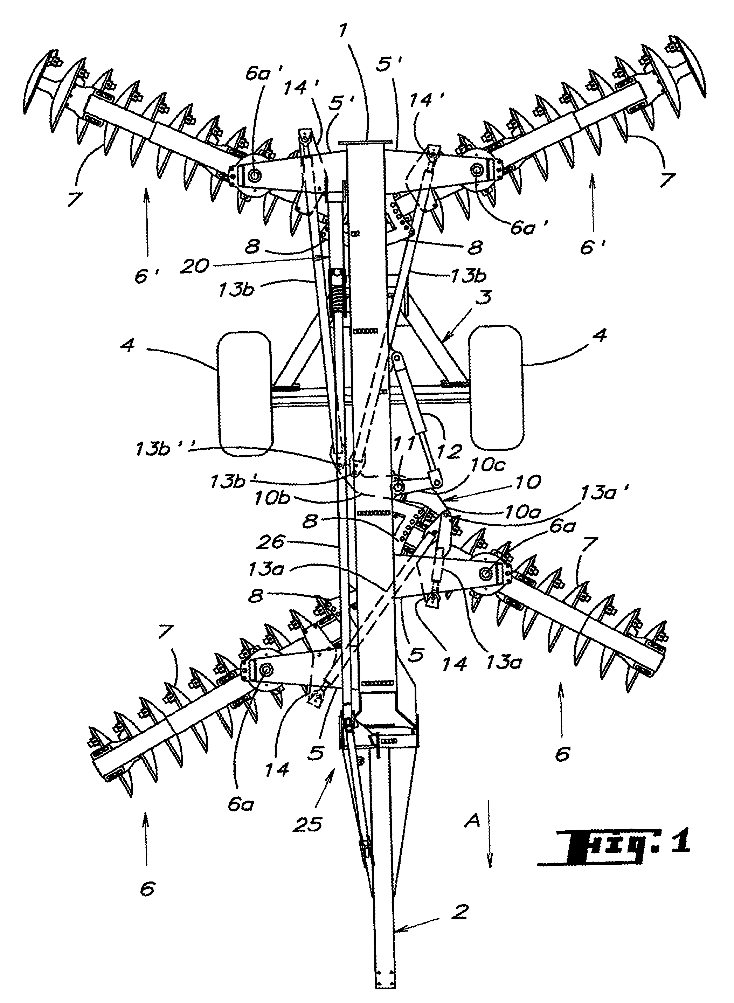

La figure 1 montre un pulvériseur agricole conforme à l'invention comportant une poutre centrale (1) prolongée d'un timon d'attelage (2) et munie d'ailerons latéraux (5, 5'). La poutre centrale (1) et ces ailerons latéraux (5, 5') constitue le châssis (1-5-5') qui est supportée par un chariot (3) muni de roues (4). Le chariot (3) est lié au châssis (1-5-5') de façon réglable en hauteur par rapport à ce dernier.

Les ailerons latéraux (5-5') sont solidaires de la poutre centrale (1) et sont répartis de part et d'autre de celle-ci. La poutre centrale (1) est avantageusement pourvue de deux ailerons latéraux avant (5) et de deux ailerons latéraux arrière (5'). Les ailerons latéraux avant (5) s'étendent de part et d'autre de la poutre centrale (1) et sont décalés selon l'axe longitudinal de celle-ci. Les ailerons latéraux arrière (5'), quant à eux, s'étendent également de part et d'autre de la poutre centrale (1), mais de façon symétrique par rapport à l'axe longitudinal de celle-ci.

Le pulvériseur comprend également des trains d'outils (6, 6'), par exemple des batteries de disques (7), suspendus sous chaque aileron (5, 5') par l'intermédiaire d'articulations correspondantes (6a, 6a') d'axe respectif sensiblement vertical. Chaque train d'outils (6, 6') peut ainsi prendre différentes orientations par rapport à la poutre centrale (1) correspondant à une position de transport et à au moins une position de travail. Les articulations (6a, 6a') permettant de monter les trains d'outils (6, 6') sous les ailerons (5, 5') sont réalisées de façon connue. La figure 1 montre le pulvériseur agricole dans une position de travail avec ses trains d'outils (6, 6') déployés.

Avantageusement, la poutre centrale (1) est pourvue d'un ou plusieurs repères de positionnement (8) permettant de repérer l'orientation des trains d'outils (6, 6') en position de travail. De tels repères de positionnement (8) permettent à l'utilisateur de retrouver facilement une orientation optimale des trains d'outils (6, 6') en partant de leur position de transport. Les repères de positionnement (8) peuvent être mécaniques, par l'intermédiaire d'une butée par exemple, ou simplement visuels.

Ce pulvériseur agricole conforme à l'invention comporte également des moyens d'entraînement pour pivoter simultanément l'ensemble des trains d'outils (6, 6'). Les moyens d'entraînement comprennent un levier double (10) monté sur la poutre centrale (1) grâce à une articulation d'axe (11) orthogonal au plan de pivotement des trains d'outils (6, 6'). Les moyens d'entraînement comprennent aussi un vérin hydraulique (12) articulé entre la poutre centrale (1) et le levier double (10) de manière à commander le pivotement dudit levier double (10). Ce dernier est en liaison d'entraînement avec chaque train d'outils (6, 6') par l'intermédiaire d'un bras (13a, 13b) correspondant. La longueur des bras (13a, 13b) est avantageusement réglable.

Le levier double (10) présente avantageusement deux branches (10a, 10b) : la première branche (10a) est en liaison d'entraînement avec les trains d'outils avant (6) et la deuxième branche (10b) est en liaison d'entraînement avec les trains d'outils arrière (6'). Les bras (13a, 13b) sont donc articulés entre les branches (10a, 10b) correspondantes et les trains d'outils (6, 6') respectifs. Les branches (10a,10b) du levier double (10) s'étendent de part et d'autre de l'axe de pivotement (11) de ce dernier. Les deux branches (10a, 10b) sont solidaires l'une de l'autre et forment ainsi un palonnier. De ce fait, il n'est prévu qu'un seul vérin hydraulique double effet (12) agissant sur ledit palonnier.

Dans l'exemple de réalisation représenté à la figure 1, les bras (13a) relient la branche (10a) aux trains d'outils avant (6) et les bras (13b) relient la branche (10b) aux trains d'outils arrière (6'). Avantageusement, les bras (13a) correspondant aux trains d'outils avant (6) sont articulés sur la première branche (10a) en un point d'articulation commun (13a'), tandis que les bras (13b) correspondant aux trains d'outils arrière (6') sont articulés chacun sur la deuxième branche (10b) en un point d'articulation (13b', 13b") respectif.

Les trains d'outils (6, 6') sont aussi pourvus chacun d'une pièce intermédiaire (14, 14') sur laquelle est articulée l'extrémité du bras (13a, 13b) correspondant. Cette pièce intermédiaire (14, 14') présente une forme adaptée au déplacement desdits trains d'outils (6, 6'), de manière à optimiser le positionnement dudit train d'outils (6), notamment en transport sur route. Chaque bras (13a, 13b) est donc en liaison d'entraînement avec le train d'outils (6, 6') correspondant au moyen de la pièce intermédiaire (14, 14') fixée sur ledit train d'outils (6, 6') de manière à impartir, à ce dernier, un moment de forces adéquat lors de son pivotement.

Les pièces intermédiaires (14, 14'), notamment, autorisent donc un repliage maximal des trains d'outils (6, 6') de façon à réduire au mieux l'encombrement en largeur du pulvériseur agricole.

Le levier double (10) présente, en outre, une partie de liaison (10c) solidaire des branches (10a, 10b) et sur laquelle est articulé le vérin hydraulique (12). La partie de liaison (10c) est par exemple inclinée angulairement par rapport à la branche (10a) pour faciliter le montage de la tige du vérin hydraulique (12) et pour s'adapter aux dimensions de celui-ci.

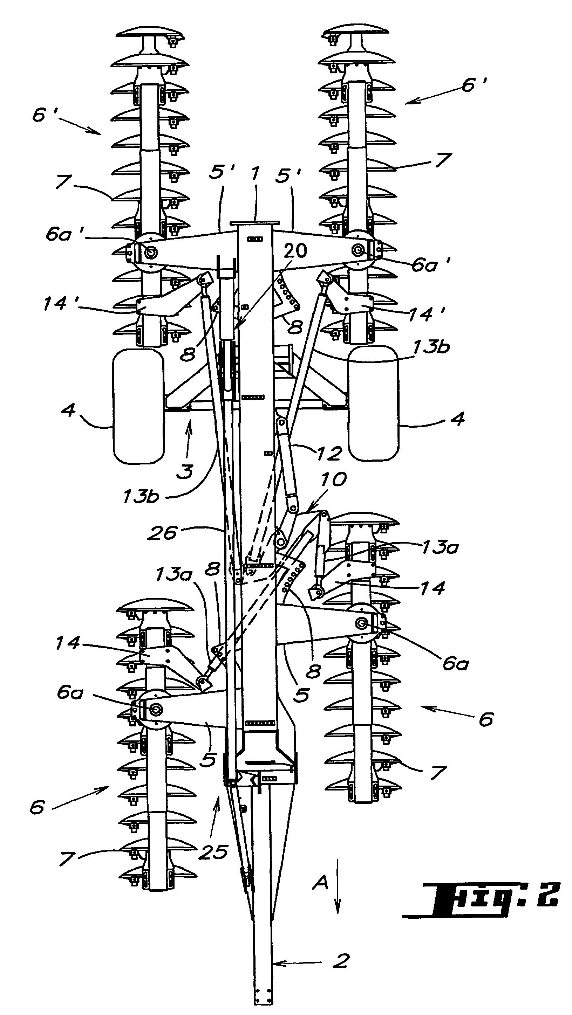

La figure 2 représente le pulvériseur de la figure 1 en position repliée de transport ou de circulation sur route. Dans cette position, les trains d'outils (6, 6') sont sensiblement alignés avec la poutre centrale (1) et le timon d'attelage (2), c'est-à-dire sensiblement suivant la direction de déplacement (A). Lorsque le vérin hydraulique (12) est en contraction, les bras (13a, 13b) ainsi que les pièces intermédiaires (14, 14') permettent d'orienter de façon optimale les trains d'outils (6, 6') pour le transport.

Le levier double (10), les bras (13a, 13b) et les pièces intermédiaires (14, 14') permettent d'exercer une poussée simultanée, respectivement une traction simultanée, sur l'ensemble des trains d'outils (6, 6') lors du passage de la position de transport à une position de travail, respectivement d'une position de travail à la position de transport.

Ce pulvériseur agricole conforme à l'invention comporte également des moyens de maintien pour bloquer en position les trains d'outils (6, 6'). Ces moyens de maintien sont réalisés notamment par le vérin hydraulique (12) agissant sur le levier double (10).

A titre d'exemple complémentaire, un ou plusieurs vérins hydrauliques additionnels peuvent être prévus pour agir sur le levier double (10).

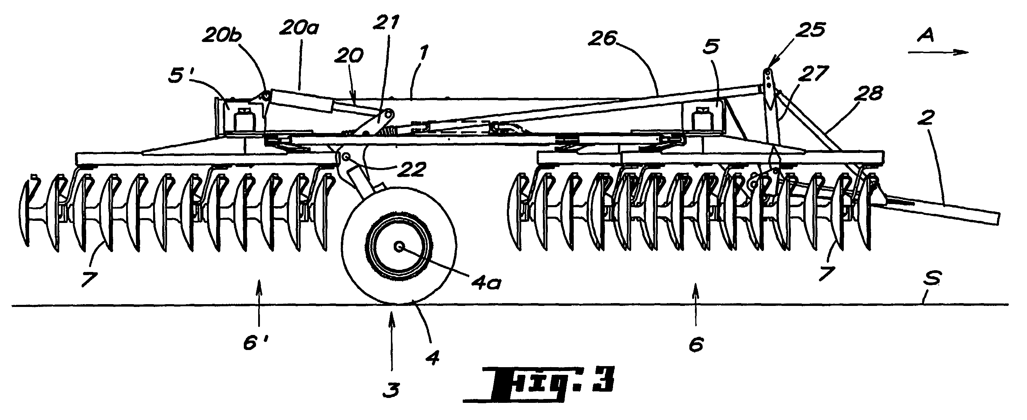

La figure 3 représente une vue latérale du pulvériseur agricole en position de transport. Le pulvériseur agricole comporte un mécanisme (20) d'abaissement et de relevage qui permet à l'utilisateur de relever et d'abaisser le châssis (1-5-5') et les trains d'outils (6, 6') par rapport aux roues (4). Le chariot (3) est à cet effet, lié au châssis (1-5-5') à l'aide d'une articulation (22) de manière à pouvoir être pivoté dans un plan orthogonal à l'axe (4a) des roues (4). L'axe de l'articulation (22) du chariot (3) s'étend donc parallèlement à l'axe (4a) des roues (4). Le chariot (3) présente en outre une branche de liaison (21) à l'extrémité de laquelle est liée la tige d'un vérin hydraulique complémentaire (20a). Le vérin (20a) est en outre articulé sur le châssis (1-5-5') en un point d'articulation (20b).

L'extension, respectivement la contraction du vérin hydraulique complémentaire (20a), permet ainsi de relever respectivement d'abaisser le châssis (1-5-5') et les trains d'outils (6, 6'). Lorsque le vérin hydraulique complémentaire (20a) est en extension maximale, l'écartement entre le sol (S) et les trains d'outils (6, 6') est maximal. Ceci correspond à la position de transport. En revanche, lorsque le vérin hydraulique complémentaire (20a) est en contraction maximale, les roues (4) se rapprochent de la poutre centrale (1) de façon suffisante pour permettre aux trains d'outils (6, 6'), en position de travail, de reposer sur le sol (S). Le déplacement du pulvériseur agricole dans le sens de la traction (A) provoquera alors la pénétration partielle des disques (7) dans le sol.

Le mécanisme (20) d'abaissement et de relevage comporte, en outre, un mécanisme (25) de manoeuvre du timon d'attelage (2), constitué notamment d'une tringlerie (26, 27, 28) montée entre la branche de liaison (21) et le timon d'attelage (2). Le mécanisme (25) est connu en soi et permet au châssis (1-5-5') et aux trains d'outils (6, 6') de se soulever ou de s'abaisser sensiblement parallèlement au sol (S) lorsque le mécanisme (20) d'abaissement et de relevage est actionné et lorsque le timon d'attelage (2) est accroché à un tracteur.

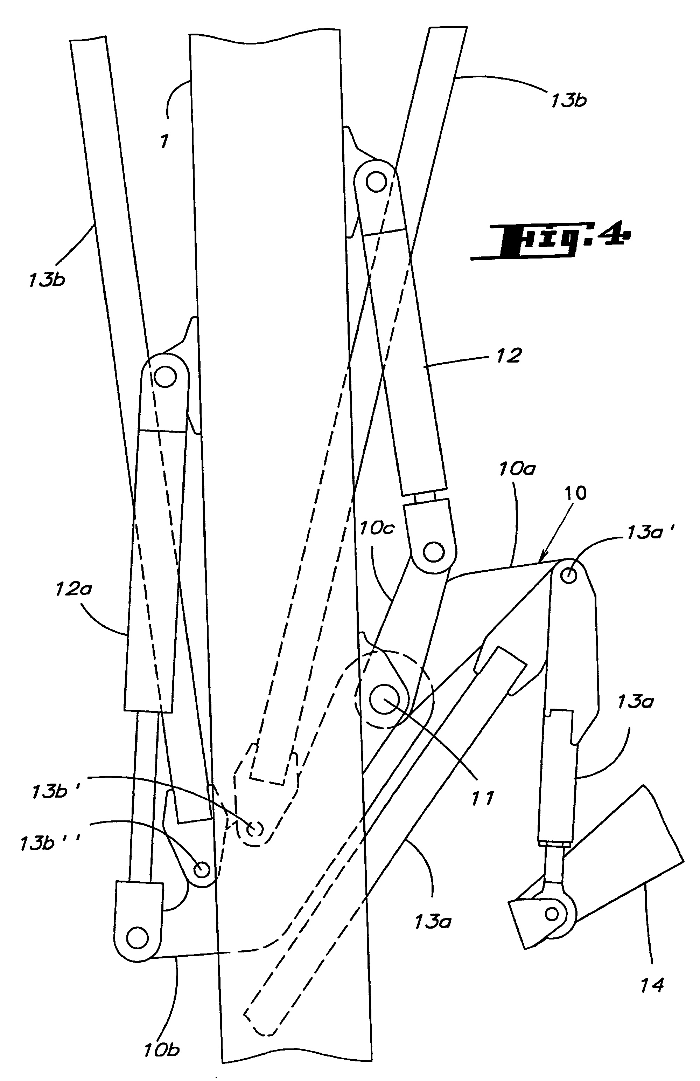

La figure 4 représente, en vue de dessus, un détail d'un deuxième exemple de réalisation d'un pulvériseur agricole conforme à l'invention. Dans cet exemple de réalisation, la première branche (10a) du levier double (10) est solidaire de la partie de liaison (10c) et est montée pivotante sur l'axe (11). La deuxième branche (10b) du levier double (10) est également montée pivotante sur l'axe (11) et ce de façon indépendante de la première branche (10a). La deuxième branche (10b) est commandée par un vérin hydraulique supplémentaire (12a) lequel est articulé sur la poutre centrale (1). Le vérin hydraulique supplémentaire (12a) permet donc de déplacer les trains d'outils arrière (6'), tandis que le vérin hydraulique (12) permet de déplacer les trains d'outils avant (6).

Les deux branches (10a, 10b) du levier double (10) constituent ainsi deux bielles pivotantes articulées sur le même axe de pivotement (11) et actionnées indépendamment ou simultanément par un vérin hydraulique (12, 12a) respectif. Avantageusement, les vérins hydrauliques (12, 12a) sont des vérins hydrauliques double effet.

Dans l'exemple représenté à la figure 4, le vérin hydraulique (12) est contracté au maximum alors que le vérin hydraulique supplémentaire (12a) est en extension maximale.

L'utilisation de liaisons hydrauliques (non représentées) adéquates pour les deux vérins (12, 12a) permet d'agir indépendamment sur les trains d'outils arrière (6') et les trains d'outils avant (6). Une telle construction permet ainsi de travailler avec des trains d'outils (6, 6') présentant une inclinaison, par rapport à la direction de déplacement (A), identique ou différente entre l'avant et l'arrière.

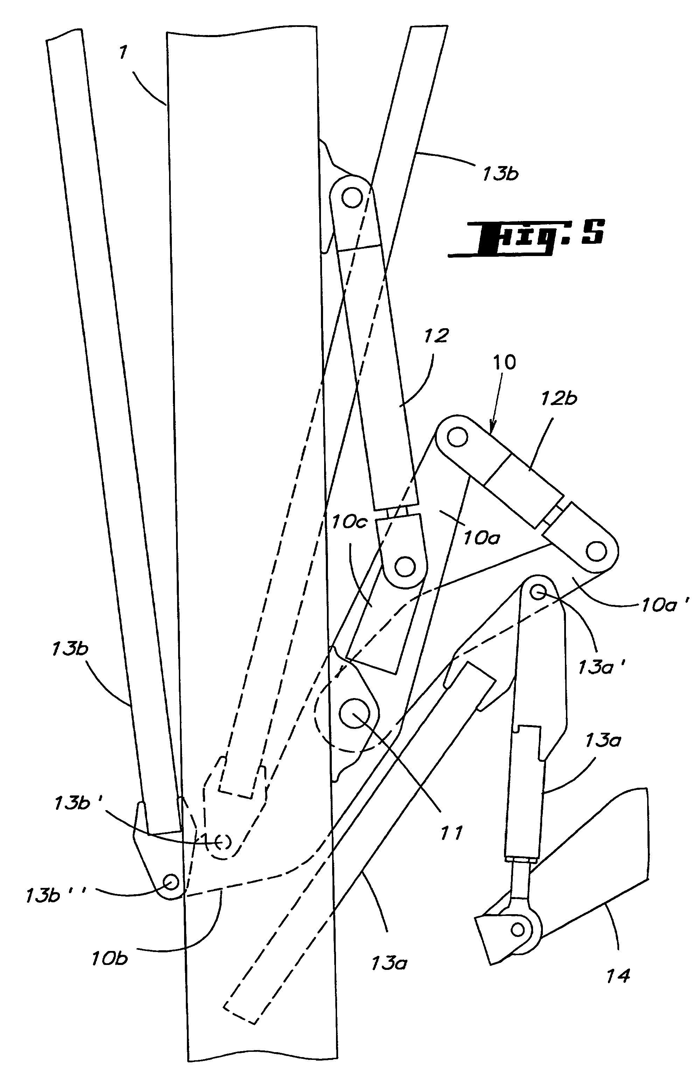

La figure 5 représente, en vue de dessus, un détail d'un troisième exemple de réalisation d'un pulvériseur agricole conforme à l'invention. Dans cet exemple de réalisation, la première branche (10a) et la deuxième branche (10b) du levier double (10) sont à nouveau solidaires l'une de l'autre. La première branche (10a) du levier double (10) est solidaire de la pièce de liaison (10c) et coopère en outre avec une bielle de réglage (10a') permettant de régler l'orientation angulaire des trains d'outils avant (6) correspondants. Cette bielle de réglage (10a') est ici d'une part articulée sur l'axe de pivotement (11) du levier double (10) et est d'autre part en liaison d'entraînement avec lesdits trains d'outils avant (6).

En outre, les extrémités libres de la bielle de réglage (10a') et de la première branche (10a) sont reliées par un organe de réglage, ici un vérin hydraulique additionnel (12b), du type double effet, lequel est susceptible de modifier l'angle entre ladite bielle de réglage (10a') et ladite première branche (10a). Le vérin hydraulique additionnel (12b) peut également être remplacé par un élément de réglage manuel. Une modification de cet angle se répercute alors directement sur l'orientation angulaire des trains d'outils avant (6) via les bras (13a). Il est évident que la deuxième branche (10b), la première branche (10a), la bielle de réglage (10a') et le vérin hydraulique additionnel (12b) constituent un ensemble de pièces rigides formant le levier double (10) pour la mise en position de transport ou de travail du pulvériseur agricole par l'intermédiaire du vérin hydraulique (12). Le vérin additionnel (12b) n'est actionné que pour modifier l'inclinaison des trains d'outils avant (6). On peut ainsi ajuster l'angle entre la bielle de réglage (10a') et la première branche (10a) pour modifier l'orientation angulaire des trains d'outils avant (6) indépendamment de l'orientation angulaire des trains d'outils arrière (6').

On comprendra que l'on pourrait également prévoir une bielle de réglage similaire au niveau de la deuxième branche (10b) pour pouvoir régler l'orientation angulaire des trains d'outils arrière (6') par rapport à la direction de déplacement (A).

Un avantage du pulvériseur agricole conforme à l'invention est obtenu par l'absence de pièces coulissantes et plus particulièrement de pièces aménagées pour réaliser un support pourvu d'un guide en coulissement pour d'autres pièces. Ceci permet de réduire substantiellement les coûts de fabrication.

En outre, les moyens d'entraînement du pulvériseur selon l'invention sont relativement compacts.

Dans le cas des exemples de réalisation représentés aux figures 4 et 5, on peut par ailleurs agir, durant le travail, sur l'inclinaison des trains d'outils (6, 6') en actionnant le vérin hydraulique (12, 12a) et/ou le vérin hydraulique additionnel (12b), ce qui procure une grande souplesse d'utilisation au pulvériseur agricole conforme à l'invention.

Les exemples de réalisation qui viennent d'être décrits concernent des pulvériseurs dits en "X". On comprendra toutefois que l'invention s'adresse également aux pulvériseurs dits en "V".

## Revendications

1. Pulvériseur agricole comportant :
- un châssis (1-5-5'),
- deux trains d'outils avant (6) et deux trains d'outils arrière (6') suspendus chacun sur le châssis (1-5-5') à l'aide d'une articulation (6a, 6a') respective d'axe sensiblement vertical, chaque train d'outils (6, 6') pouvant prendre différentes orientations par rapport au châssis (1-5-5'), correspondant à une position de transport avec encombrement en largeur réduit et à au moins une position de travail,
- des moyens d'entraînement comprenant d'une part un dispositif à leviers en liaison d'entraînement avec lesdits trains d'outils (6, 6') et monté pivotant sur le châssis (1-5-5') à l'aide d'une articulation d'axe (11), et d'autre part au moins un vérin hydraulique (12) agissant sur ledit dispositif à leviers pour pivoter lesdits trains d'outils (6, 6'),
***caractérisé en ce* que** le dispositif à leviers comporte un levier double (10) monté pivotant sur le châssis (1-5-5') à l'aide d'une articulation d'axe (11) sensiblement orthogonal au plan de pivotement des trains d'outils (6, 6'), ledit levier double (10) comportant une première branche (10a) en liaison d'entraînement avec les trains d'outils avant (6) et une deuxième branche (10b) en liaison d'entraînement avec les trains d'outils arrière (6') et que ledit vérin hydraulique (12) est articulé entre ledit levier double (10) et le chassis (1-5-5') de manière à permettre audit levier double (10) et auxdits liaisons d'entraînement d'exercer une poussée simultanée, respectivement une traction simultanée, sur l'ensemble des trains d'outils (6, 6') lors du passage de la position de transport à une position de travail, respectivement d'une position de travail à la position de transport.

2. Pulvériseur selon la revendication 1, ***caractérisé en ce* que** le levier double (10) est en liaison d'entraînement avec chaque train d'outils (6, 6') par l'intermédiaire d'un bras (13a, 13b) correspondant.

3. Pulvériseur selon la revendication 2, ***caractérisé en ce* que** la longueur des bras (13a, 13b) est réglable.

4. Pulvériseur selon la revendication 2 ou 3, ***caractérisé en ce* que** les bras (13a, 13b) sont articulés entre les branches (10a, 10b) correspondantes et les trains d'outils (6, 6') respectifs.

5. Pulvériseur selon la revendication 4, ***caractérisé en ce* que** les bras (13a) correspondant aux trains d'outils avant (6) sont articulés directement ou indirectement sur la première branche (10a) en un point d'articulation commun (13a'), tandis que les bras (13b) correspondant aux trains d'outils arrière (6') sont articulés chacun directement ou indirectement sur la deuxième branche (10b) en un point d'articulation (13b', 13b") respectif.

6. Pulvériseur selon l'une quelconque des revendications 2 à 5, ***caractérisé en ce* que** chaque bras (13a, 13b) est en liaison d'entraînement avec le train d'outils (6, 6') correspondant au moyen d'une pièce intermédiaire (14, 14') fixée sur ledit train d'outils (6, 6') de manière à impartir à ce dernier un moment de forces adéquat lors de son pivotement.

7. Pulvériseur selon la revendication 6, ***caractérisé en ce* que** le levier double (10), les bras (13a, 13b) et les pièces intermédiaires (14, 14') permettent d'exercer une poussée simultanée, respectivement une traction simultanée, sur l'ensemble des trains d'outils (6, 6') lors du passage de la position de transport à une position de travail, respectivement d'une position de travail à la position de transport.

8. Pulvériseur selon l'une quelconque des revendications 1 à 7, ***caractérisé en ce* que** les deux branches (10a, 10b) du levier double (10) s'étendent de part et d'autre de l'axe (11) de pivotement de ce dernier.

9. Pulvériseur selon l'une quelconque des revendications 1 à 8, ***caractérisé en ce* que** les deux branches (10a, 10b) du levier double (10) sont solidaires l'une de l'autre et forment un palonnier.

10. Pulvériseur selon la revendication 9, ***caractérisé en ce* qu'**il est prévu un seul vérin hydraulique (12) agissant sur ledit palonnier.

11. Pulvériseur selon la revendication 10, ***caractérisé en ce* que** ledit vérin (12) est un vérin double effet.

12. Pulvériseur selon l'une quelconque des revendications 9 à 11, ***caractérisé en ce* que** l'une au moins des branches (10a, 10b) du levier double (10) coopère avec une bielle de réglage (10a') permettant de régler l'orientation angulaire des trains d'outils (6, 6') correspondants, cette bielle de réglage (10a') étant d'une part articulée sur le levier double (10) et d'autre part en liaison d'entraînement avec lesdits trains d'outils (6, 6'), un vérin (12b) étant articulé entre ledit levier double (10) et ladite bielle de réglage (10a').

13. Pulvériseur selon la revendication 12, ***caractérisé en ce* que** la bielle de réglage (10a') est articulée sur l'axe de pivotement (11) du levier double (10).

14. Pulvériseur selon la revendication 12 ou 13, ***caractérisé en ce* que** ledit vérin (12b) est un vérin hydraulique, de préférence un vérin hydraulique double effet.

15. Pulvériseur selon l'une quelconque des revendications 12 à 14, ***caractérisé en ce* que** la bielle de réglage (10a') est en liaison d'entraînement avec les trains d'outils avant (6).

16. Pulvériseur selon l'une quelconque des revendications 1 à 8, ***caractérisé en ce* que** les deux branches (10a, 10b) du levier double (10) constituent deux bielles pivotantes articulées sur le même axe de pivotement (11) et actionnées indépendamment ou simultanément par un vérin hydraulique respectif (12, 12a).

17. Pulvériseur selon la revendication 16, ***caractérisé en ce* que** les vérins hydrauliques (12, 12a) sont des vérins hydrauliques double effet.

18. Pulvériseur selon l'une quelconque des revendications 1 à 17*,* ***caractérisé en ce* que** le châssis (1-5-5') est constitué d'une poutre centrale (1) pourvue de deux ailerons latéraux avant (5) et de deux ailerons latéraux arrière (5'), chaque train d'outils avant (6) étant suspendu sur un aileron latéral avant (5) correspondant et chaque train d'outils arrière (6') étant suspendu sur un aileron latéral arrière (5') correspondant.

19. Pulvériseur selon la revendication 18, ***caractérisé en ce* que** les deux ailerons latéraux avant (5) sont fixés sur la poutre centrale (1) de part et d'autre de celle-ci et décalés selon l'axe longitudinal de ladite poutre centrale (1).

20. Pulvériseur selon la revendication 18 ou 19, ***caractérisé en ce* que** les deux ailerons latéraux arrière (5') sont fixés sur la poutre centrale (1) de façon symétrique par rapport à l'axe longitudinal de celle-ci.

21. Pulvériseur selon l'une quelconque des revendications 1 à 20, ***caractérisé en ce* qu'**il comporte des moyens de maintien pour bloquer en position les trains d'outils (6, 6').

22. Pulvériseur selon la revendication 21, ***caractérisé en ce* que** les moyens de maintien sont notamment constitués par le (les) vérin(s) hydraulique(s) (12, 12a) agissant sur le levier double (10).

23. Pulvériseur selon l'une quelconque des revendications 1 à 22, ***caractérisé en ce* qu'**il comporte un chariot (3) muni de roues (4) et lié au châssis (1-5-5') de manière réglable en hauteur par rapport à ce dernier.

## Patentansprüche

1. Landwirtschaftliche Egge, die
- ein Gestell (1-5-5'),
- zwei vordere Werkzeugsätze (6) und zwei hintere Werkzeugsätze (6'), die jeweils am Gestell (1-5-5') mit Hilfe eines jeweiligen Gelenks (6a, 6a') mit einer im Wesentlichen vertikalen Achse aufgehängt sind, wobei jeder Werkzeugsatz (6, 6') verschiedene Ausrichtungen in Bezug auf das Gestell (1-5-5') einnehmen kann, die einer Transportposition mit verringertem Platzbedarf in der Breite und mindestens einer Arbeitsposition entsprechen,
- Antriebsmittel, mit einerseits einer Hebelvorrichtung in Antriebsverbindung mit den Werkzeugsätzen (6, 6'), die schwenkbar an dem Gestell (1-5-5') mit Hilfe eines Gelenks mit einer Achse (11) angebracht ist, und andererseits mindestens einem Hydraulikzylinder (12), der auf die Hebelvorrichtung einwirkt, um die Werkzeugsätze (6, 6') zu schwenken,
umfasst, ***dadurch gekennzeichnet,* dass** die Hebelvorrichtung einen Doppelhebel (10) umfasst, der schwenkbar auf dem Gestell (1-5-5') mit Hilfe eines Gelenks mit einer Achse (11) im Wesentlichen orthogonal zur Schwenkebene der Werkzeugsätze (6, 6') befestigt ist, wobei der Doppelhebel (10) einen ersten Schenkel (10a) in Antriebsverbindung mit den vorderen Werkzeugsätzen (6) und einen zweiten Schenkel (10b) in Antriebsverbindung mit den hinteren Antriebssätzen (6') umfasst, und dass der Hydraulikzylinder (12) zwischen dem Doppelhebel (10) und dem Gestell (1-5-5') derart angelenkt ist, dass er es dem Doppelhebel (10) und den Antriebsverbindungen ermöglicht, einen gleichzeitigen Schub bzw. einen gleichzeitigen Zug auf die gesamten Werkzeugsätze (6, 6') beim Übergang von der Transportposition in eine Arbeitsposition bzw. von einer Arbeitsposition in die Transportposition auszuüben.

2. Egge nach Anspruch 1, ***dadurch gekennzeichnet,* dass** der Doppelhebel (10) in Antriebsverbindung mit jeder Werkzeugsätze (6, 6') über einen entsprechenden Arm (13a, 13b) steht.

3. Egge nach Anspruch 2, ***dadurch gekennzeichnet,* dass** die Länge der Arme (13a, 13b) einstellbar ist.

4. Egge nach Anspruch 2 oder 3, ***dadurch gekennzeichnet,* dass** die Arme (13a, 13b) zwischen den entsprechenden Schenkel (10a, 10b) und den jeweiligen Werkzeugsätze (6, 6') angelenkt sind.

5. Egge nach Anspruch 4, ***dadurch gekennzeichnet,* dass** die Arme (13a), die den vorderen Werkzeugsätze (6) entsprechen, direkt oder indirekt am ersten Schenkel (10a) in einem gemeinsamen Gelenkspunkt (13a') angelenkt sind, während die Arme (13b), die den hinteren Werkzeugsätze (6') entsprechen, jeweils direkt oder indirekt auf dem zweiten Schenkel (10b) in einem jeweiligen Gelenkspunkt (13b', 13b") angelenkt sind.

6. Egge nach irgend einem der Ansprüche 2 bis 5, ***dadurch gekennzeichnet,* dass** jeder Arm (13a, 13b) in Antriebsverbindung mit dem entsprechenden Werkzeugsatz (6, 6') mit Hilfe eines Zwischenstücks (14, 14') steht, das auf dem Werkzeugsatz (6, 6') derart befestigt ist, dass diesem letztgenannten ein entsprechendes Kraftmoment bei seinem Schwenken vorgegeben wird.

7. Egge nach Anspruch 6, ***dadurch gekennzeichnet,* dass** es der Doppelhebel (10), die Arme (13a, 13b) und die Zwischenstücke (14, 14') ermöglichen, einen gleichzeitigen Schub bzw. einen gleichzeitigen Zug auf die gesamten Werkzeugsätze (6, 6') beim Übergang von der Transportposition in eine Arbeitsposition bzw. von einer Arbeitsposition in die Transportposition auszuüben.

8. Egge nach irgend einem der Ansprüche 1 bis 7, ***dadurch gekennzeichnet,* dass** sich die beiden Schenkel (10a, 10b) des Doppelhebels (10) beiderseits der Schwenkachse (11) dieses letztgenannten erstrecken.

9. Egge nach irgend einem der Ansprüche 1 bis 8, ***dadurch gekennzeichnet,* dass** die beiden Schenkel (10a, 10b) des Doppelhebels (10) miteinander fest verbunden sind und einen Steuerhebel bilden.

10. Egge nach Anspruch 9, ***dadurch gekennzeichnet,* dass** nur ein Hydraulikzylinder (12) vorgesehen ist, der auf den Steuerhebel einwirkt.

11. Egge nach Anspruch 10, ***dadurch gekennzeichnet,* dass** der Zylinder (12) ein Zylinder mit Doppelwirkung ist.

12. Egge nach irgend einem der Ansprüche 9 bis 11, ***dadurch gekennzeichnet,* dass** mindestens einer der Schenkel (10a, 10b) des Doppelhebels (10) mit einer Einstellstange (10a') zusammenwirkt, die es ermöglicht, die Winkelausrichtung der entsprechenden Werkzeugsätze (6, 6') einzustellen, wobei diese Einstellstange (10a') einerseits auf dem Doppelhebel (10) angelenkt ist und andererseits mit dem Werkzeugsatz (6, 6') in Antriebsverbindung steht, wobei ein Zylinder (12b) zwischen dem Doppelhebel (10) und der Einstellstange (10a') angelenkt ist.

13. Egge nach Anspruch 12, ***dadurch gekennzeichnet,* dass** die Einstellstange (10a') auf der Schwenkachse (11) des Doppelhebels (10) angelenkt ist.

14. Egge nach Anspruch 12 oder 13, ***dadurch gekennzeichnet,* dass** der Zylinder (12b) ein Hydraulikzylinder, vorzugsweise ein Hydraulikzylinder mit Doppelwirkung, ist.

15. Egge nach irgend einem der Ansprüche 12 bis 14, ***dadurch gekennzeichnet,* dass** die Einstellstange (10a') in Antriebsverbindung mit den vorderen Werkzeugsätzen (6) steht.

16. Egge nach irgend einem der Ansprüche 1 bis 8, ***dadurch gekennzeichnet,* dass** die beiden Schenkel (10a, 10b) des Doppelhebels (10) zwei schwenkbare Stangen, die auf derselben Schwenkachse (11) angelenkt sind und unabhängig oder gleichzeitig von einem jeweiligen Hydraulikzylinder (12, 12a) betätigt werden, darstellen.

17. Egge nach Anspruch 16, ***dadurch gekennzeichnet,* dass** die Hydraulikzylinder (12, 12a) Hydraulikzylinder mit Doppelwirkung sind.

18. Egge nach irgend einem der Ansprüche 1 bis 17, ***dadurch gekennzeichnet,* dass** das Gestell (1-5-5') von einem Zentralträger (1) gebildet ist, der mit zwei vorderen Seitenflügeln (5) und zwei hinteren Seitenflügeln (5') versehen ist, wobei jeder vordere Werkzeugsatz (6) an einem entsprechenden vorderen Seitenflügel (5) und jeder hintere Werkzeugsatz (6') an einem entsprechenden hinteren Seitenflügel (5') aufgehängt ist.

19. Egge nach Anspruch 18, ***dadurch gekennzeichnet,* dass** die beiden vorderen Seitenflügel (5) auf dem Zentralträger (1) beiderseits desselben angeordnet und entlang der Längsachse des Zentralträgers (1) versetzt sind.

20. Egge nach Anspruch 18 oder 19, ***dadurch gekennzeichnet,* dass** die beiden hinteren Seitenflügel (5') auf dem Zentralträger (1) symmetrisch zur Längsachse desselben befestigt sind.

21. Egge nach irgend einem der Ansprüche 1 bis 20, ***dadurch gekennzeichnet,* dass** sie Haltemittel umfasst, um die Werkzeugsätze (6, 6') in ihrer Position festzustellen.

22. Egge nach Anspruch 21, ***dadurch gekennzeichnet,* dass** die Haltemittel insbesondere von dem (den) Hydraulikzylinder(n) (12, 12a) gebildet sind, die auf den Doppelhebel (10) einwirken.

23. Egge nach irgend einem der Ansprüche 1 bis 22, ***dadurch gekennzeichnet,* dass** sie einen mit Rädern (4) versehenen Wagen (3) umfasst, der mit dem Gestell (1-5-5') in Bezug auf dieses höhenverstellbar verbunden ist.

## Claims

1. Agricultural harrow comprising:
- a chassis (1-5-5'),
- two front implement trains (6) and two rear implement trains (6') each suspended from the chassis (1-5-5') using a respective articulation (6a, 6a') of substantially vertical axis, each implement train (6, 6') being able to adopt various orientations with respect to the chassis (1-5-5') corresponding to a transport position with reduced widthwise bulk and at least one work position,
- drive means comprising, on the one hand, a device involving levers in a driving connection with the said implement trains (6, 6') and mounted so as to pivot on the chassis (1-5-5') using an articulation of axis (11) and, on the other hand, at least one hydraulic ram (12) acting on the said lever-involving device in order to pivot the said implement trains (6, 6'),
***characterized in* that** the device involving levers comprises a double lever (10) mounted so as to pivot on the chassis (1-5-5') using an articulation of axis (11) substantially orthogonal to the plane of pivoting of the implement trains (6, 6'), the said double lever (10) comprising a first branch (10a) in a driving connection with the front implement trains (6) and a second branch (10b) in a driving connection with the rear implement trains (6'), and **in that** the said hydraulic ram (12) is articulated between the said double lever (10) and the chassis (1-5-5') in such a way as to allow the said double lever (10) and the said driving connections to exert simultaneous thrust, or simultaneous tension, on all the implement trains (6, 6') when passing from the transport position to a work position, respectively when passing from a work position to the transport position.

2. Harrow according to Claim 1, ***characterized in* that** the double lever (10) is in a driving connection with each implement train (6, 6') via a corresponding arm (13a, 13b).

3. Harrow according to Claim 2, ***characterized in* that** the length of the arms (13a, 13b) is adjustable.

4. Harrow according to Claim 2 or 3, ***characterized in* that** the arms (13a, 13b) are articulated between the corresponding branches (10a, 10b) and the respective implement trains (6, 6').

5. Harrow according to Claim 4, ***characterized in* that** the arms (13a) corresponding to the front implement trains (6) are articulated directly or indirectly to the first branch (10a) at a common articulation point (13a'), while the arms (13b) corresponding to the rear implement trains (6') are each articulated directly or indirectly to the second branch (10b) at a respective articulation point (13b', 13b").

6. Harrow according to any one of Claims 2 to 5, ***characterized in* that** each arm (13a, 13b) is in a driving connection with the corresponding implement train (6, 6') by means of an intermediate piece (14, 14') fixed to the said implement train (6, 6') in such a way as to impart an adequate statical moment thereto as it pivots.

7. Harrow according to Claim 6, ***characterized in* that** the double lever (10), the arms (13a, 13b) and the intermediate pieces (14, 14') allow simultaneous thrust, or simultaneous tension, to be exerted on all of the implement trains (6, 6') when passing from the transport position to a work position, respectively when passing from a work position to the transport position.

8. Harrow according to any one of Claims 1 to 7, ***characterized in* that** the two branches (10a, 10b) of the double lever (10) extend one on each side of the pivot axis (11) thereof.

9. Harrow according to any one of Claims 1 to 8, ***characterized in* that** the two branches (10a, 10b) of the double lever (10) are secured to one another and form a swing bar.

10. Harrow according to Claim 9, ***characterized in* that** only one hydraulic ram (12) acting on the said swing bar is provided.

11. Harrow according to Claim 10, ***characterized in* that** the said ram (12) is a double-acting ram.

12. Harrow according to any one of Claims 9 to 11, ***characterized in* that** at least one of the branches (10a, 10b) of the double lever (10) collaborates with an adjusting rod (10a') allowing the angular orientation of the corresponding implement trains (6, 6') to be adjusted, this adjusting rod (10a') being, on the one hand, articulated to the double lever (10) and, on the other hand, in a driving connection with the said implement trains (6, 6'), a ram (12b) being articulated between the said double lever (10) and the said adjusting rod (10a').

13. Harrow according to Claim 12, ***characterized in* that** the adjusting rod (10a') is articulated to the pivot axis (11) of the double lever (10).

14. Harrow according to Claim 12 or 13, ***characterized in* that** the said ram (12b) is a hydraulic ram, preferably a double-acting hydraulic ram.

15. Harrow according to any one of Claims 12 to 14, ***characterized in* that** the adjusting rod (10a') is in a driving connection with the front implement trains (6).

16. Harrow according to any one of Claims 1 to 8, ***characterized in* that** the two branches (10a, 10b) of the double lever (10) constitute two pivoting connecting rods articulated to the same pivot axis (11) and actuated independently or simultaneously by a respective hydraulic ram (12, 12a).

17. Harrow according to Claim 16, ***characterized in* that** the hydraulic rams (12, 12a) are double-acting hydraulic rams.

18. Harrow according to any one of Claims 1 to 17, ***characterized in* that** the chassis (1-5-5') consists of a central beam (1) provided with two front lateral wings (5) and two rear lateral wings (5'), each front implement train (6) being suspended from a corresponding front lateral wing (5) and each rear implement train (6') being suspended from a corresponding rear lateral wing (5').

19. Harrow according to Claim 18, ***characterized in* that** the two front lateral wings (5) are fixed to the central beam (1) one on each side thereof and are offset along the longitudinal axis of the said central beam (1).

20. Harrow according to Claim 18 or 19, ***characterized in* that** the two rear lateral wings (5') are fixed to the central beam (1) symmetrically with respect to the longitudinal axis thereof.

21. Harrow according to any one of Claims 1 to 20, ***characterized in* that** it comprises holding means for locking the implement trains (6, 6') in position.

22. Harrow according to Claim 21, ***characterized in* that** the holding means consist in particular of the hydraulic ram(s) (12, 12a) acting on the double lever (10).

23. Harrow according to any one of Claims 1 to 22, ***characterized in* that** it comprises a carriage (3) equipped with wheels (4) and connected to the chassis (1-5-5') in a manner such that its height relative to this chassis can be adjusted.
